# EUROPEAN PATENT SPECIFICATION

(11) **EP 1 632 370 B1**
(45) Date of publication and mention of the grant of the patent: **23.03.2011**
(21) Application number: 05076954.6
(22) Date of filing: 24.08.2005
(51) Int. Cl.: B60G 11/46, B60G 11/28, B60G 7/00, B60G 9/00

(54) **Suspension arm with flattened end part**
Aufhängungslenker mit abgeflachtem Eindteil
Bras de suspension avec une partie d'extrémité aplatie

(30) Priority: 01.09.2004 NL 1026947
(43) Date of publication of application: 08.03.2006
(73) Proprietor: WEWELER NEDERLAND B.V., 7332 AP Apeldoorn (NL)
(72) Inventor: Aalderink, Derk Geert, 7245 NV Laren (NL); Bramer, Hans, 6961 WR Eerbeek (NL)
(74) Representative: Brookhuis, Hendrik Jan Arnold

(56) References cited:
- EP-A- 1 138 432
- EP-A- 1 145 878
- EP-A- 1 273 464
- DE-A1- 19 617 929
- DE-C1- 4 224 965
- US-B1- 6 340 165
- PATENT ABSTRACTS OF JAPAN vol. 005, no. 090 (M-073), 12 June 1981 (1981-06-12) -& JP 56 036308 A (NHK SPRING CO LTD), 9 April 1981 (1981-04-09)
- PATENT ABSTRACTS OF JAPAN vol. 016, no. 083 (M-1216), 28 February 1992 (1992-02-28) & JP 03 268805 A (SUMITOMO METAL IND LTD), 29 November 1991 (1991-11-29)

## Description

The invention relates to a method for making a resilient arm intended to be used in an air-sprung wheel suspension system of a vehicle, which resilient arm is substantially rectangular in cross section, has a first end part which is designed to pivotably secure the suspension arm to the chassis of a vehicle and has a second end part which is designed to mount an air-spring bellows on the resilient arm.

Resilient arms of this type are known. Known resilient arms are generally brought into the desired shape by rolling, in which case the thickness varies over the length of the resilient arm while the width is substantially constant. The first end part takes the form of a securing eyelet through which a securing bolt can fit. The first end part is formed by rolling the corresponding end part to the desired thickness and then bending it over to form a securing eyelet. The second end part is likewise brought to the desired thickness by rolling, which thickness gradually decreases towards the end of the resilient arm. An example of such a resilient arm is shown in Figures 1 and 2 of EP 1 138 432 A2.

Nowadays, resilient arms are made narrower than has hitherto been the case, for example 70-75 mm instead of 100 mm, while at the same time the thickness is increased to produce the required bending strength. A narrower resilient arm leads to problems with assembly of the spring bellows, since only a relatively narrow mounting surface is available. This applies in particular in the situation in which the air-spring bellows needs to be mounted offset with respect to the longitudinal centre axis of the resilient arm, in view of the space available next to the tyres of the vehicle. These problems are solved by mounting a bellows carrier between the resilient arm and the air-spring bellows or by arranging a reinforcing plate in that section of the air-spring bellows which is connected to the resilient arm. In certain cases, the second end part of the resilient arm is also bent sideways, so that the resilient arm acquires approximately the shape of a hockey stick. However, these solutions incur additional costs.

JP 580 37 332 A, JP 2003 267 019 A, JP 2005 507 5 203 A and JP 560 36 308 A show relevant designs of resilient vehicle wheel suspensions.

It is an object of the invention to provide a resilient arm in which an air-spring bellows can be mounted on a relatively narrow resilient arm without the need for additional means on the resilient arm, even if the air-spring bellows needs to be mounted laterally offset with respect to the longitudinal centre axis of the resilient arm.

According to the invention, this object is achieved by a method for making a resilient arm according to claim 1.

Preferred embodiments of the method according to the invention are defined in the dependent claims.

The invention will be explained in more detail in the following description with reference to the drawing, in which:
Fig. 1 shows a perspective view of a specific embodiment of the resilient arm made according to the invention,
Fig. 2 shows a plan view of the resilient arm from Fig. 1,
Fig. 3 shows a side view of the resilient arm from Fig. 1,
Fig. 4 shows a plan view of another embodiment of the resilient arm made according to the invention,
Fig. 5 shows a plan view of yet another embodiment of the resilient arm made according to the invention,
Fig. 6 shows a side view of a resilient arm made according to the invention in a crank shape, and
Fig. 7 shows a plan view of yet another embodiment of the resilient arm made according to the invention.

The resilient arm 1 made according to the invention is intended to be used in an air-sprung wheel suspension system of a vehicle, as shown for example in EP-A-1273464.

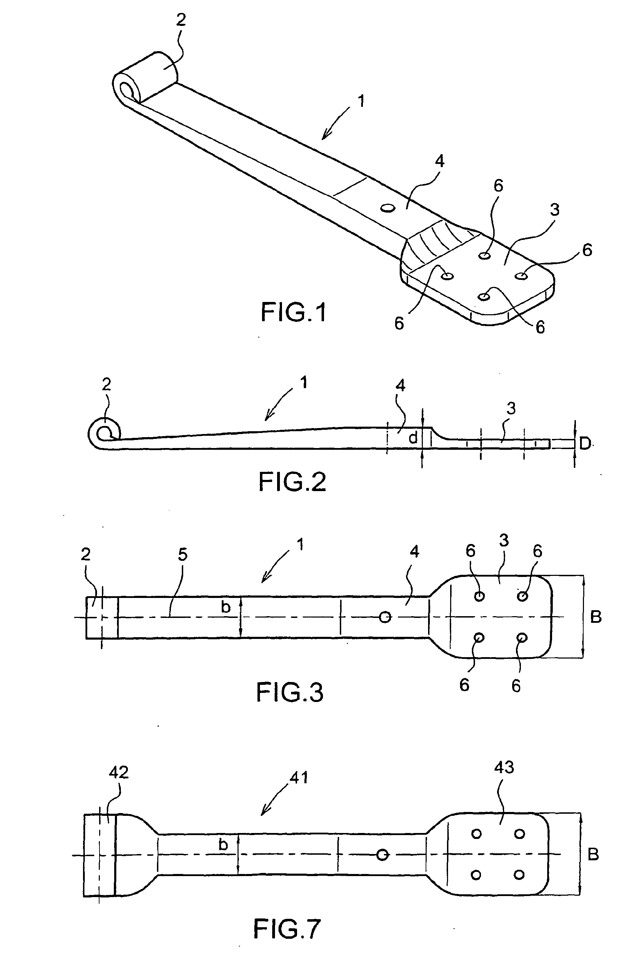

The resilient arm 1 shown in Fig. 1 - 3 is substantially rectangular in cross section, preferably with rounded corners, and has a first end part 2, which is designed to pivotably secure the resilient arm 1 to the chassis of a vehicle, and a second end part 3, which is designed to mount an air-spring bellows on the resilient arm 1.

The first end part 2 is in the form of a securing eyelet through which a securing bolt can fit. In the embodiment shown, the first end part 2 is formed by rolling the corresponding end part to the desired thickness and then bending it over to form a securing eyelet.

The second end part 3 is integral with the remainder of the resilient arm 1. The second end part 3 has a width B which is greater than the width b of the remainder of the resilient arm 1 and has a substantially uniform thickness D which is less than the thickness d of the adjoining part 4 of the resilient arm 1. It is preferable for the width B to be at least 25% greater than the width b.

Designing the resilient arm 1 in this way allows an air-spring bellows to be mounted on the resilient arm 1 without the need for additional means with a relatively narrow width of the resilient arm 1 even if the air-spring bellows needs to be mounted laterally offset with respect to the longitudinal centre axis 5 of the resilient arm 1. Furthermore, holes 6 for securing an air-spring bellows may be arranged in the second end part 3, at right angles to the surface of the second end part 3. Arranging the second end part 3 so as to be asymmetric in the thickness direction of the resilient arm 1, as shown in Fig. 2, allows the same resilient arm to be used for various ride heights. It is easy to turn over the resilient arm 1.

The second end part 3 is formed by flattening it. This contrasts with the conventional resilient arms, in which the second end part is formed by rolling.

Flattening has a number of advantages over rolling. Flattening allows the second end part 3 of the resilient arm 1 according to the invention to be formed in a relatively simple way. On account of the profile of the thickness of the second end part 3, which thickness is substantially uniform and smaller than the thickness of the adjoining part of the resilient arm 1, less material is required than with a rolled, obliquely tapering second end part, making the resilient arm more lightweight. Furthermore, in the case of a flattened end part 2, the amount of waste material (cutting waste) is considerably reduced compared to a rolled end part, or even there is no waste material whatsoever. Flattening produces convex side edges of the second end part, whereas with rolling there is a risk of the side edges of the second end part being concave, which has the drawback of high stresses in the outermost fibres.

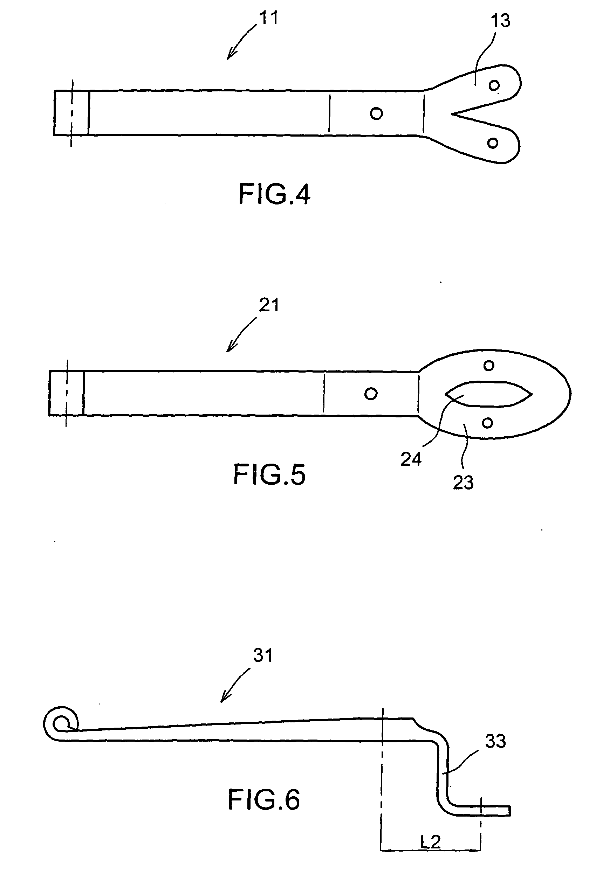

Furthermore, flattening offers the option of providing the second end part 3 with one or more reinforcing ribs extending in the longitudinal direction of the resilient arm or of providing the second end part with a different shape, as shown in Fig. 4 and 5.

In the embodiment shown in Fig. 4, the second end part 13 of the resilient arm 11 is substantially V-shaped. In the embodiment shown in Fig. 5, the second end part 23 of the resilient arm 21 is provided with a hole 24.

Fig. 6 shows an embodiment of the resilient arm 31 according to the invention in a crank shape, the second end part 33 of this resilient arm likewise being formed by flattening. In this embodiment, the dimension L2 can be smaller than in the case of a comparable resilient arm in which the second (obliquely tapering) end part is formed by rolling.

In another possible embodiment of the resilient arm according to the invention, which is shown in Fig. 7, the first end part 42 of the resilient arm 41 with securing eyelet is also wider than the remainder of the resilient arm 41. This wider end part 42 is preferably formed by flattening the end part and then bending the flattened end part over to form a securing eyelet. The second end part 43 is, for example, of exactly the same width as relatively wide resilient arms which have been known hitherto. This has the advantage that the known wide resilient arms can easily be replaced by narrower resilient arms according to the invention without the securing point on the vehicle having to be adapted.

## Claims

1. Method for making a resilient arm (1) for an air sprung wheel suspension system, wherein
- the arm (1) is brought in a shape with a substantially rectangular cross section by rolling,
- a first end part (2) is formed on the arm (1) in the form of a securing eyelet, which is designed to pivotably secure the arm (1) to the chassis of a vehicle and,
- a second end part (3) is integrally formed on the arm (1), which second end part (3) is designed to mount an air spring bellows on the arm,
**characterized in that** the second end part (3) is formed by flattening but not rolling such that it becomes wider than the width of the remainder of the arm (1).

2. Method according to claim 1, wherein the first end part (2) is formed by rolling and then bending it into the securing eyelet.

3. Method according to claim 1, wherein the first end part (2) is formed by flattening and then bending it into the securing eyelet.

## Patentansprüche

1. Verfahren zum Ausbilden eines federnden Armes (1) für ein mit Luft gefedertes Radfedersystem, wobei
- der Arm (1) durch Walzen in eine Form mit einem im Wesentlichen rechteckigen Querschnitt gebracht wird,
- ein erstes Endteil (2) bei dem Arm in der Form einer Befestigungsöse ausgebildet wird, welche derart entworfen ist, dass sie den Arm (1) schwenkbar an dem Fahrgestell eines Fahrzeugs befestigt, und
- ein zweites Endteil (3) ganzheitlich mit dem Arm (1) ausgebildet wird, wobei das zweite Endteil (3) derart entworfen ist, dass damit ein Luftfederbalg an dem Arm montiert wird,
**dadurch gekennzeichnet, dass** das zweite Endteil (3) durch Abplatten, aber nicht durch Walzen, ausgebildet wird, so dass es breiter als die Breite des restlichen Armes (1) wird.

2. Verfahren nach Anspruch 1, **dadurch gekennzeichnet, dass** das erste Endteil (2) durch Walzen ausgebildet wird und dann in die Befestigungsöse gebogen wird.

3. Verfahren nach Anspruch 1, **dadurch gekennzeichnet, dass** das erste Endteil (2) durch Abplatten ausgebildet wird und dann in die Befestigungsöse gebogen wird.

## Revendications

1. Procédé pour fabriquer un bras élastique (1) pour un système de suspension de roue à ressort pneumatique, dans lequel :
le bras (1) est formé avec une section transversale sensiblement rectangulaire par laminage,
une première partie d'extrémité (2) est formée sur le bras (1) sous la forme d'un oeillet de fixation, qui est conçu pour fixer de manière pivotante le bras (1) au châssis d'un véhicule, et
une deuxième partie d'extrémité (3) est formée de manière solidaire sur le bras (1) ; laquelle deuxième partie (3) est conçue pour monter un soufflet de ressort pneumatique sur le bras,
**caractérisé en ce que** la deuxième partie d'extrémité (3) est formée par aplatissement et pas par laminage, de sorte qu'elle devient plus large que la largeur du reste du bras (1).

2. Procédé selon la revendication 1, dans lequel la première partie d'extrémité (2) est formée par laminage et ensuite en la cintrant dans l'oeillet de fixation.

3. Procédé selon la revendication 1, dans lequel la première partie d'extrémité (2) est formée par aplatissement et ensuite en la cintrant dans l'oeillet de fixation.
